# FASCICULE DE BREVET EUROPEEN

(11) **EP 0 604 306 B1**
(45) Date de publication et mention de la délivrance du brevet: **24.07.1996**
(21) Numéro de dépôt: 93403126.1
(22) Date de dépôt: 21.12.1993
(51) Int. Cl.: B60Q 1/26

(54) **Feu plaqué contre une carrosserie de véhicule automobile muni d'un joint d'étanchéité tri-fonction**
Gegen die Karosserie angedrückte Fahrzeugleuchte mit Dichtungsstreifen
Vehicle light with weather strip applied against the vehicle body

(30) Priorité: 23.12.1992 FR 9215603
(43) Date de publication de la demande: 29.06.1994
(73) Titulaire: VALEO VISION, 93000 Bobigny (FR)
(72) Inventeur: Molines, Jean-Marc, F-38890 Saint-Chef (FR)
(74) Mandataire: Martin, Jean-Jacques

(56) Documents cités:
- DE-A- 3 337 217
- DE-U- 9 110 970
- FR-A- 2 659 609
- US-A- 5 152 599

## Description

La présente invention concerne de manière générale les feux plaqués contre des carrosseries de véhicules automobiles, tels que par exemple un feu de position ou bien un répétiteur latéral, et plus particulièrement un feu comportant un socle muni d'une lampe et monté sur la carrosserie d'un véhicule automobile par l'intermédiaire d'éléments de fixation introduits dans des trous du socle et de la carrosserie, un voyant de fermeture monté sur le socle et un joint périphérique destiné notamment à assurer l'étanchéité entre d'une part le socle et la carrosserie et d'autre part le socle et le voyant de fermeture.

On connaît déjà un feu tel que décrit ci-dessus qui comporte un joint d'étanchéité présentant une triple fonction d'étanchéité, c'est-à-dire assurant l'étanchéité entre le socle et le voyant, entre le socle et la carrosserie et permettant le passage étanche de vis de fixation du socle sur la carrosserie.

En outre, on connaît du document FR-2 659 609 un feu de signalisation dans lequel un joint élastique est monté sur un bord périphérique du réflecteur. Ce joint comporte une partie avec un bourrelet destiné à s'appliquer contre l'écran, une partie à lèvres destinée à venir contre un réceptacle dans la carrosserie et des gorges destinées à recevoir des moyens de maintien du réflecteur. Ce document forme la première partie da la revendication 1.

Enfin, on connaît des documents US-5 152 599, DE-9 110 970 et DE-3 337 217 des feux du type comprenant un joint d'étanchéité entre l'écran et le bloc optique qui comporte des trous de passage de vis pour la fixation de l'écran sur le bloc.

L'invention vise à proposer un feu plaqué contre une carrosserie de véhicule automobile possédant un joint d'étanchéité efficace et dont la réalisation est simple et économique.

Plus précisément, l'invention propose un feu comportant un joint périphérique d'étanchéité qui comprend une partie en forme de gorge positionnée contre le socle du côté du voyant et ouverte vers le voyant de manière à recevoir de façon étanche une nervure formée dans le voyant en direction du socle, une partie de liaison qui s'étend de la partie en forme de gorge vers la carrosserie en traversant le socle, une partie formant au moins une lèvre en saillie à partir du socle en direction de la carrosserie et destinée à assurer l'étanchéité entre le socle et la carrosserie, et une pluralité de pattes qui s'étendent chacune le long de la carrosserie, entre le socle et celle-ci, et présentant chacune un trou aligné avec des trous homologues du socle et de la carrosserie et permettant le passage d'un élément de fixation, lesdites pattes assurant une étanchéité au niveau des trous du socle.

Selon un mode de réalisation du feu selon l'invention, la partie formant au moins une lèvre du joint d'étanchéité comporte deux lèvres inclinées selon respectivement deux directions divergentes à partir du socle vers la carrosserie.

En outre, selon une autre caractéristique du feu conforme à l'invention, la nervure formée dans le voyant comporte un décrochement pour le maintien d'un élément optique parallèle au voyant, entre ce dernier et le socle.

La description qui va suivre en regard des dessins annexés, donnés à titre d'exemples non limitatifs, fera bien comprendre en quoi consiste l'invention et comment elle peut être réalisée.

La figure 1 est une vue schématique de côté en coupe longitudinale du feu selon l'invention.

La figure 2 est une vue schématique de côté en coupe longitudinale, à échelle agrandie, du socle muni du joint d'étanchéité du feu de la figure 1.

La figure 3 est une vue schématique en plan du joint d'étanchéité du feu selon l'invention.

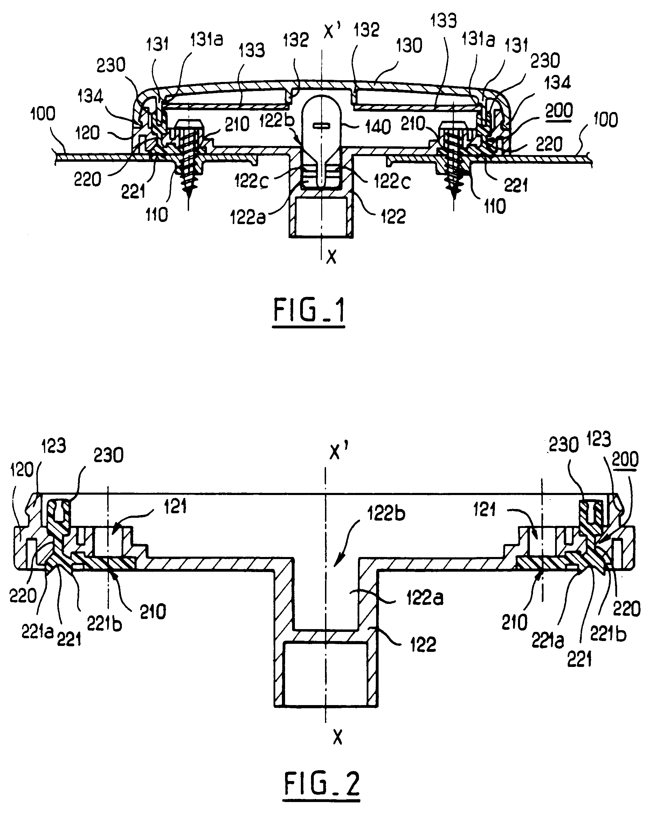

En référence, tout d'abord aux figures 1 et 2, on a représenté un feu plaqué contre une carrosserie 100 de véhicule automobile qui comporte un socle 120 réalisé en matière plastique telle que l'Acrylonitryle Butadiène Styrène, et muni d'une lampe 140 du type "sans culot". Le socle 120 est monté sur la carrosserie 100 par l'intermédiaire de vis à tête 110, par exemple quatre vis 110, introduites dans des trous 121 du socle 120 et vissées dans des taraudages homologues prévus dans la carrosserie 100. Les trous de montage 121 prévus dans le socle 120 sont des trous cylindriques dont la section circulaire correspond à celle du filetage des vis à tête 110 et dont la longueur est égale à environ un tiers de celle des vis 110. Ainsi, lors du vissage des vis à tête 110 dans la carrosserie 100 via les trous de montage 121 du socle, les têtes de vis viennent presser le socle contre la carrosserie.

En outre, le socle 120 comporte une partie centrale 122 pour la mise en place de la lampe 140, qui s'insère à l'intérieur de la carrosserie 100 via un trou de passage prévu à cet effet. Cette partie centrale 122 définit un logement 122a qui s'étend suivant une direction X-X' perpendiculaire à la carrosserie 100, correspondant à la direction de mise en place/extraction de la lampe 140, et qui comporte une ouverture 122b vers l'extérieur de la carrosserie 100. Ce logement 122a contient une douille munie de moyens de maintien 122c de la lampe 140. Ainsi, la base de la lampe 140 est introduite par l'ouverture 122b dans ledit logement 122a suivant ladite direction X-X', pour être mise en place dans lesdits moyens de maintien 122c de la douille disposée à l'intérieur du logement 122a.

Par ailleurs, le feu de la figure 1 comporte un voyant 130 qui est monté sur le socle 120 de façon à protéger la lampe 140 et à permettre une diffusion du faisceau lumineux émis par la lampe 140. Ce voyant 130 présente une forme essentiellement plane et comporte un bord périphérique recourbé qui s'étend suivant la direction X-X' vers la carrosserie 100 et comprenant des encoches de montage 134. Le voyant 130 est mis en place sur le socle 120 suivant ladite direction X-X' de telle sorte que les encoches de montage 134 du voyant 130 viennent s'encliqueter sur des dents d'encliquetage périphériques 123 prévues sur le bord du socle 120. En outre, le voyant 130 comprend une nervure périphérique 131 formée dans une région adjacente au bord périphérique du voyant 130 et qui s'étend en direction du socle 120. Cette nervure 131 comporte à sa base un décrochement 131a pour le calage et la fixation d'un élément optique 133, tel qu'une lentille de Fresnel, parallèlement audit voyant 130 entre ce dernier et le socle 120. Plus particulièrement, le voyant 130 comporte une petite nervure centrale circulaire 132 formée dans ledit voyant en direction du socle 120. Cette nervure centrale 132 s'étendant jusqu'au niveau de l'encoche 131a de la nervure 131 adjacente au bord du voyant, permet en association avec ladite encoche 131a la fixation dudit élément optique 133.

En référence aux figures 1, 2, et 3, le feu comprend également un joint périphérique d'étanchéité 200 réalisé par exemple en matière élastomère, qui assure une triple fonction d'étanchéité à savoir une étanchéité entre le socle 120 et la carrosserie 100, entre le socle 120 et le voyant 130, ainsi qu'une étanchéité au niveau des trous 121 du socle 120.

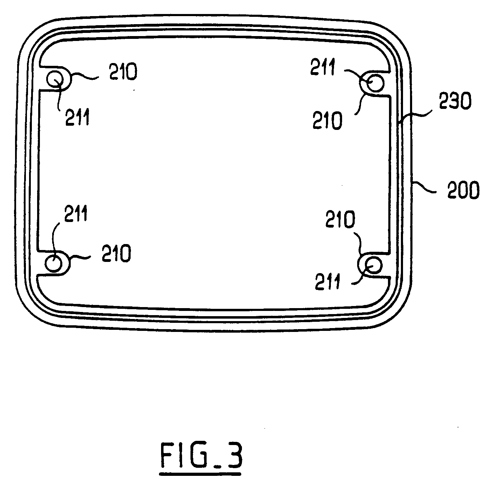

Ce joint d'étanchéité, ici de forme générale rectangulaire, (voir fig.3), comporte une partie en forme de gorge périphérique 230 dont la base est insérée dans une encoche prévue dans le socle 120 du côté du voyant 130. Cette gorge 230 est ouverte vers le voyant 130 de manière à recevoir de façon étanche la nervure 131 formée dans le voyant 130 en direction du socle 120. De plus, la partie en forme de gorge 230 présente une entrée évasée facilitant l'introduction de ladite nervure 131. La nervure 131 s'engage dans la gorge 230 lors du montage du voyant 130 sur le socle 120, pour réaliser une étanchéité périphérique entre ces deux éléments.

En outre, le joint d'étanchéité 200 comporte une partie de liaison 220 qui s'étend de la partie en forme de gorge 230 vers la carrosserie 100 en traversant le socle 120. Cette partie de liaison 220 se prolonge du côté de la carrosserie 100 par une partie 221 formant deux lèvres 221a, 221b en saillie à partir du socle en direction de la carrosserie 100. Ces deux lèvres 221a, 221b sont inclinées selon respectivement deux directions divergentes à partir du socle 120 vers la carrosserie 100.

Lorsque le socle 120 muni du joint d'étanchéité 200 est fixé sur la carroserie 100 par les vis 110, les lèvres 221a, 221b dudit joint, en saillie du socle vers la carrosserie, s'écrasent contre cette dernière afin d'assurer une étanchéité périphérique entre la carrosserie et le socle.

Enfin, le joint d'étanchéité 200 comprend une pluralité de pattes 210, ici quatre pattes, qui s'étendent chacune le long de la carrosserie 100, entre le socle 120 et celle-ci. Plus particulièrement, chaque patte 210 est insérée dans une encoche essentiellement complémentaire prévue dans le socle 120 et présente un trou 211 aligné avec des trous homologues du socle et de la carrosserie. Lors de la fixation du socle 120 sur la carrosserie 100, les trous 211 prévus dans les pattes 210 permettent le passage des vis 110, ces pattes 210 s'écrasent alors entre le socle et la carrosserie en assurant l'étanchéité au niveau des trous cylindriques 121 du socle 120.

Il convient de préciser que les encoches de montage 134 du voyant 130 encliquetées sur les dents d'encliquetage 123 du socle 120, permettent avantageusement de maintenir solidement le voyant 130 sur le socle 120 muni du joint d'étanchéité 200, ce dernier exerçant sur le voyant 130 une force vers l'extérieur.

## Revendications

1. Feu plaqué contre une carrosserie (100) de véhicule automobile, comportant un socle (120) muni d'une lampe (140) et monté sur la carrosserie (100) par l'intermédiaire d'éléments de fixation (110) introduits dans des trous du socle (120) et de la carrosserie (100), un voyant de fermeture (130) monté sur le socle (120) et un joint périphérique (200) destiné notamment à assurer l'étanchéité entre d'une part le socle (120) et la carrosserie (100) et d'autre part le socle (120) et le voyant de fermeture (130), le joint d'étanchéité (200) comportant une partie en forme de gorge (230) positionnée contre le socle (120) du côté du voyant (130) et ouverte vers le voyant (130) de manière à recevoir de façon étanche une nervure (131) formée dans le voyant (130) en direction du socle (120), une partie de liaison (220) qui s'étend de la partie en forme de gorge (230) vers la carrosserie (100), une partie formant au moins une lèvre (221) en saillie à partir du socle (120) en direction de la carrosserie (100) et destinée à assurer l'étanchéité entre le socle (120) et la carrosserie (100), caractérisé en ce qu'il comporte une pluralité de pattes (210) qui s'étendent chacune le long de la carrosserie (100), entre le socle (120) et celle-ci, et présentant chacune un trou (211) aligné avec des trous homologues du socle (120) et de la carrosserie (100) et permettant le passage d'un élément de fixation (110), lesdites pattes (210) assurant une étanchéité au niveau des trous du socle (120), et en ce que la partie de liaison (220) traverse le socle (120).

2. Feu selon la revendication 1, caractérisé en ce que la partie formant au moins une lèvre (221) du joint d'étanchéité (200) comporte deux lèvres (221a,221b) inclinées selon respectivement deux directions divergentes à partir du socle (120) vers la carrosserie (100).

3. Feu selon l'une des revendications 1 ou 2, caractérisé en ce que le socle (120) présente une encoche périphérique dans laquelle est insérée la base de la partie en forme de gorge (230) du joint d'étanchéité (200).

4. Feu selon l'une quelconque des revendications 1 à 3, caractérisé en ce que le socle (120) comporte une pluralité d'encoches dans lesquelles sont logées les pattes (210) du joint d'étanchéité (200).

5. Feu selon l'une quelconque des revendications 1 à 4, caractérisé en ce que la partie en forme de gorge (230) du joint d'étanchéité (200) présente une portion d'entrée évasée.

6. Feu selon l'une quelconque des revendications 1 à 5, caractérisé en ce que la nervure (131) formée dans le voyant (130) comporte un décrochement (131a) pour le maintien d'un élément optique (133) parallèle au voyant (130), entre ce dernier et le socle (120).

7. Feu selon l'une quelconque des revendications 1 à 6, caractérisé en ce que la nervure (131) formée dans le voyant (130) et la partie en forme de gorge (230) s'étendent dans une direction de montage (X-X') par encliquetage du voyant (130) sur le socle (120).

8. Feu selon l'une quelconque des revendications 1 à 7, caractérisé en ce que le voyant (130) comporte au moins une encoche de montage (134) apte à s'encliqueter selon ladite direction de montage (X-X') sur au moins une dent d'encliquetage périphérique (123) prévue sur le socle (120).

9. Feu selon l'une quelconque des revendications 1 à 8, caractérisé en ce que le voyant (130) comporte un bord périphérique s'étendant en direction du socle (120) et comprenant des encoches de montage (134) aptes à s'encliqueter selon ladite direction de montage (X-X') sur des dents d'encliquetage périphériques (123) prévues sur le bord du socle (120).

10. Feu selon l'une quelconque des revendications 1 à 9, caractérisé en ce que le joint périphérique d'étanchéité (200) est réalisé en matière élastomère.

## Claims

1. A light applied against a motor vehicle body (100), the light comprising a support (120) equipped with a bulb (140) and mounted on the body (100) by means of fixing elements (110) inserted into holes in the support (120) and in the body (100), a closure glass (130) mounted on the support (120), and a peripheral gasket (200) designed in particular to provide sealing between the support (120) and the body (100), and between the support (120) and the closure glass (130), the sealing gasket (200) including a grooved portion (230) positioned against the support (120) facing the glass (130) and open facing towards the glass (130) so as to receive in sealed manner a rib (131) formed on the glass (130) and projecting towards the support (120), a link portion (220) extending from the grooved portion (230) towards the body (100), and a portion forming at least one lip (221) projecting from the support (120) towards the body (100), and designed to provide sealing between the support (120) and the body (100), characterized in that the gasket further includes a plurality of tabs (210), each of which extends along the body (100) between the support and the body, and is provided with a hole (211) aligned with corresponding holes in the support (120) and in the body (100), so that a fixing element (110) can pass therethrough, said tabs (210) providing sealing at the holes in the socket (120), and in that the link portion (220) passes through the support (120).

2. A light according to claim 1, characterized in that the portion forming at least one lip (221) of the sealing gasket (200) includes two lips (221a, 221b) sloping in respective directions that are divergent going from the support (120) towards the body (100).

3. A light according to claim 1 or 2, characterized in that the support (120) is provided with a peripheral notch into which the base of the grooved portion (230) of the sealing gasket (200) is inserted.

4. A light according to any one of claims 1 to 3, characterized in that the support (120) is provided with a plurality of notches in which the tabs (210) on the sealing gasket (200) are received.

5. A light according to any one of claims 1 to 4, characterized in that the grooved portion (230) of the sealing gasket (200) is provided with a flared opening portion.

6. A light according to any one of claims 1 to 5, characterized in that the rib (131) formed on the glass (130) is provided with a set-back (131a) for holding an optical element (133) parallel to the glass (130) between said glass and the support (120).

7. A light according to any one of claims 1 to 6, characterized in that the rib (131) formed on the glass (130) and the grooved portion (230) extend in a mounting direction (X-X') in which the glass (130) is snap-fastened onto the support (120).

8. A light according to any one of claims 1 to 7, characterized in that the glass (130) is provided with at least one mounting notch (134) suitable for being snap-fastened in said mounting direction (X-X') onto at least one peripheral snap-fastening tooth (123) provided on the support (120).

9. A light according to any one of claims 1 to 8, characterized in that the glass (130) is provided with a peripheral edge extending towards the support (120) and provided with mounting notches (134) suitable for being snap-fastened in said mounting direction (X-X') onto peripheral snap-fastening teeth (123) provided on the edge of the support (120).

10. A light according to any one of claims 1 to 9, characterized in that the peripheral sealing gasket (200) is made of an elastomer material.

## Patentansprüche

1. Gegen die Karosserie (100) eines Kraftfahrzeugs angedrückte Fahrzeugleuchte, bestehend aus einem Sockel (120), der mit einer Lampe (140) versehen und an der Karosserie (100) anhand von Befestigungselementen (110) angebracht ist, die in Löcher des Sockels (120) und der Karosserie (100) eingesetzt sind, einem auf dem Sockel (120) angebrachten Deckglas (130) und einem Umfangsdichtungsstreifen (200), der insbesondere zur Abdichtung einerseits zwischen dem Sockel (120) und der Karosserie (100) und andererseits zwischen dem Sockel (120) und dem Abdeckglas (130) dient, wobei der Dichtungsstreifen (200) einen Teil in Form einer Auskehlung (230) umfaßt, die gegen den Sockel (120) auf der Seite des Deckglases (130) positioniert und zum Deckglas (130) hin offen ist, um dicht eine im Deckglas (130) in Richtung des Sockels (120) ausgebildete Rippe (131) aufnehmen zu können, ferner einen Verbindungsteil (220), der sich von dem Auskehlungsteil (230) zur Karosserie (100) erstreckt, einen Teil, der wenigstens eine vom Sockel (120) aus in Richtung der Karosserie (100) vorspringende Dichtlippe (221) bildet, um die Abdichtung zwischen dem Sockel (120) und der Karosserie (100) herbeizuführen, **dadurch gekennzeichnet,** daß er eine Mehrzahl von Ansätzen (210) umfaßt, die sich jeweils entlang der Karosserie (100) zwischen dieser und dem Sockel (120) erstrecken und jeweils ein Loch (211) aufweisen, das mit entsprechenden Löchern des Sockels (120) und der Karosserie (100) fluchtet und den Durchgang eines Befestigungselements (110) ermöglicht, wobei die besagten Ansätze (210) eine Abdichtung im Bereich der Löcher des Sockels (210) herbeiführen, und daß der Verbindungsteil (220) durch den Sockel (120) hindurchgeht.

2. Fahrzeugleuchte nach Anspruch 1 , **dadurch gekennzeichnet,** daß der wenigstens eine Dichtlippe (221) bildende Teil des Dichtungsstreifens (200) zwei Dichtlippen (221a, 221b) umfaßt, die in zwei divergierenden Richtungen vom Sockel (120) aus zur Karosserie (100) geneigt sind.

3. Fahrzeugleuchte nach einem der Ansprüche 1 oder 2, **dadurch gekennzeichnet,** daß der Sockel (120) eine Umfangsnut aufweist, in welche die Unterseite des Auskehlungsteils (230) des Dichtungsstreifens (200) eingesetzt ist.

4. Fahrzeugleuchte nach einem der Ansprüche 1 bis 3, **dadurch gekennzeichnet,** daß der Sockel (120) eine Mehrzahl von Nuten umfaßt, in welche die Ansätze (210) des Dichtungsstreifens (200) eingesetzt sind.

5. Fahrzeugleuchte nach einem der Ansprüche 1 bis 4, **dadurch gekennzeichnet,** daß der Auskehlungsteil (230) des Dichtungsstreifens (200) einen konisch erweiterten Eingangsbereich aufweist.

6. Fahrzeugleuchte nach einem der Ansprüche 1 bis 5, **dadurch gekennzeichnet,** daß die im Deckglas (130) ausgebildete Rippe (131) eine Aussparung (131a) zur Halterung eines optischen Elements (133) umfaßt, das parallel zum Deckglas (130) zwischen diesem und dem Sockel (120) angeordnet ist.

7. Fahrzeugleuchte nach einem der Ansprüche 1 bis 6, **dadurch gekennzeichnet,** daß sich die im Deckglas (130) ausgebildete Rippe (131) und der Auskehlungsteil (230) mittels Verrastung des Deckglases (130) auf dem Sockel (120) in einer Einbaurichtung (X-X') erstrecken.

8. Fahrzeugleuchte nach einem der Ansprüche 1 bis 7, **dadurch gekennzeichnet,** daß das Deckglas (130) wenigstens eine Einbaunut (134) umfaßt, die entlang der besagten Einbaurichtung (X-X') an wenigstens einem auf dem Sockel (120) vorgesehenen Umfangsrastzahn (123) einrasten kann.

9. Fahrzeugleuchte nach einem der Ansprüche 1 bis 8, **dadurch gekennzeichnet,** daß das Deckglas (130) eine Umfangskante aufweist, die sich in Richtung des Sockels (120) erstreckt und Einbaunuten (134) enthält, die entlang der besagten Einbaurichtung (X-X') an Umfangsrastzähnen (123) einrasten können, die an der Kante des Sockels (120) vorgesehen sind.

10. Fahrzeugleuchte nach einem der Ansprüche 1 bis 9, **dadurch gekennzeichnet,** daß der Umfangsdichtungsstreifen (200) aus Elastomer ausgeführt ist.
